# EUROPEAN PATENT APPLICATION

(11) **EP 4 721 615 A1**
(43) Date of publication of application: **08.04.2026**
(21) Application number: 24895811.8
(22) Date of filing: 26.08.2024
(51) Int. Cl.: A43B 1/14, B29D 35/10

(54) **SOLE MANUFACTURING METHOD AND SOLE MOLD**

(30) Priority: 28.11.2023 CN 202311618891; 23.07.2024 CN 202421754463 U
(71) Applicant: Fujian Qiying New Materials Technology Co., Ltd., Quanzhou, Fujian 362200 (CN)
(72) Inventor: HUANG, Yangling, Quanzhou, Fujian 362200 (CN); HUANG, Yuhan, Quanzhou, Fujian 362200 (CN); PAN, Zhixian, Quanzhou, Fujian 362200 (CN)
(74) Representative: Dr. Gassner & Partner mbB
(86) International application number: PCT/CN2024/114442
(87) International publication number: WO 2025/112710

(57) **Abstract**

The present application relates to the technical field of footwear production and provides a shoe sole manufacturing method, including: step S1, preparing a film; step S2, mounting the film; step S3, selecting one film adhesion method according to a molding state of the shoe sole; where for a foam preform that has already been foamed and molded, a first film adhesion method is selected, including: S31, mounting the foam preform inside the mold cavity and closing the mold cavity; S32, extracting gas between the foam preform and the film by applying a secondary negative pressure, where the pressure difference between the foam preform and the film is less than that between the mold cavity and the film, pressure difference is present between the both; and S33, heating the shoe sole mold to melt the adhesive layer, thereby bonding the film and the foam preform; step S4, cooling and shaping; and step S5, trimming and shaping. Based on the above, after the shoe sole is produced, the film may tightly cover an outer surface of the shoe sole, improving the molding quality of the shoe sole. In addition, the present application also provides a shoe sole mold applied in the above shoe sole manufacturing method.

## Description

### TECHNICAL FIELD

The present application belongs to the technical field of footwear production, and in particular, relates to a shoe sole manufacturing method and a shoe sole mold.

### BACKGROUND ART

Foamed shoe soles refer to shoe soles made from materials such as EVA, TPU, or PVC through a foaming process. They possess advantages including low density, excellent elasticity, and good processability, and are widely used in the field of shoe materials.

As foamed shoe soles are internally composed of a plurality of foam particles, the foam particles are prone to peeling with increased service life or when the shoe sole is scraped by external objects. Therefore, after the foamed shoe soles are processed, a film is usually adhered to an outer periphery of the shoe sole to mitigate the peeling of the foam particles. However, an outer surface of foamed shoe soles produced by a foaming process is uneven, when the film is adhered to the outer periphery of the shoe sole, the fit flatness between the film and the foamed shoe sole is poor. This may result in molding defects such as air bubbles, which affects the molding quality of the shoe sole and thus requires improvement.

### SUMMARY

Based on the above, the present application provides a shoe sole manufacturing method and a shoe sole mold.

In a first aspect, the shoe sole manufacturing method provided by the present application adopts the following technical solution:

A shoe sole manufacturing method includes following steps:
step S1, preparing a film, where a surface of the film is provided with an adhesive layer;
step S2, mounting the film, fixing the film on a shoe sole mold, preheating the film, and adsorbing the film to an inner wall of a mold cavity of the shoe sole mold by a negative pressure;
step S3, selecting one film adhesion method according to a molding state of the shoe sole;
where for a foam preform that has already been foamed and molded, a first film adhesion method is selected, comprising:
   S31, mounting the foam preform inside the mold cavity and closing the mold cavity;
   S32, extracting gas between the foam preform and the film by applying a secondary negative pressure; and
   S33, heating the shoe sole mold to melt the adhesive layer, thereby bonding the film and the foam preform;
   where for foam particles that have not started foam molding, a second film adhesion method is selected, comprising:
      S34, cutting a bottom of the film;
      S35, sealing the mold cavity, filling the foam particles into the mold cavity, and removing the negative pressure applied to the film; and
      S36, introducing steam between the foam particles and the film, to foam the foam particles and to be bonded with the film;
      step S4, cooling and shaping; and
      step S5, trimming and shaping.

By adopting the above technical solution, preheating the film and using negative pressure to ensure the film is tightly attached to the inner wall of the mold cavity, and selecting a corresponding film adhesion method according to the actual production condition of the shoe sole helps to improve the efficiency of the film wrapping operation. Furthermore, by installing the foam preform or foam particles inside a sealed mold cavity, both the tight bonding between the foam preform and the film and the direct foam molding of the foam particles may improve the smoothness of adhesion between the film and the foamed body, which reduces the occurrence of molding defects such as air bubbles, and enhances the molding quality of the shoe sole. Finally, after cooling and shaping the shoe sole mold and the shoe sole, and trimming the shoe sole after demolding, a finished shoe solemay be obtained.

Among these, in the film adhesion method for the foam preform and the film, after the prefabricated foam preform is placed inside the mold cavity, the mold cavity is closed and evacuated to create a negative pressure therein, allowing the extraction of the gas between the foam preform and the film. By setting the negative pressure value between the foam preform and the film to be less than that between the mold cavity and the film, a pressure difference is created therebetween, thereby forcing the film to tightly adhere to the inner wall of the mold cavity. It can be understood that, compared with the state before step S32, the pressure difference between the inner and outer sides of the film decreases after the evacuation of the space between the foam preform and the film. This can ensure the film remains tightly adhered to the inner wall of the mold cavity, while reducing the likelihood of the film being forced by the pressure difference to locally extend into the first negative pressure holes, thereby facilitating subsequent demolding, trimming and shaping of the finished shoe sole.

Optionally, for the foam preform that has already been foamed and molded, an outer surface of the foam preform has exhaust patterns.

By adopting the above technical solution, when the foam preform is placed in the mold cavity and pressed against the film, the space between the foam preform and the film may be evacuated. The exhaust patterns on the outer surface of the foam preform act as exhaust passages, facilitating the discharge of gas between the foam preform and the film, thereby reducing the occurrence of molding defects such as air bubbles.

Optionally, for the foam preform that has already been foamed and molded, a dimension of the foam preform is larger than a dimension of the mold cavity, with a difference of 1-2cm between the both.

By adopting the above technical solution, a foam preform with the dimension larger than that of the mold cavity is adopted, followed by compressing and placing the foam preform into the mold cavity, the foam preform may tightly abut against the inner side of the film, reducing gas residue therebetween. Subsequently, by evacuating the space between the upper mold and the foam preform, both the gas between the foam preform and the film and the gas within the pores may be discharged through the internal pores of the foam preform. At this time, the foam preform may contract overall and become denser while maintaining tight abutment against the film. Subsequently, after heating of the mold cavity, the foam preform and the film may bond tightly, which enhances the molding quality of the shoe sole.

In a second aspect, the shoe sole mold provided by the present application adopts the following technical solution.

A shoe sole mold includes an upper mold, a middle mold, a lower mold, and a heat insulation mold arranged in sequence, where a side surface of the lower mold is configured with a mold cavity for shoe sole molding, a side surface of the upper mold is fixed with a punch, the punch is located inside the mold cavity in a closed state, an inner wall of the mold cavity is configured with a plurality of first negative pressure holes, the plurality of first negative pressure holes are open to an outer bottom surface of the lower mold, a side wall of the punch is configured with a plurality of second negative pressure holes, and the plurality of second negative pressure holes are open to an outer side surface of the upper mold; the heat insulation mold includes a vacuum base mold for fixation of the lower mold and heat insulation layers arranged on inner side walls of the vacuum base mold, the heat insulation layers jointly cover an outer side surface of the lower mold, a vacuum gap for heat insulation and preservation is formed between the vacuum base mold and the lower mold, a bottom wall of the vacuum base mold is formed with a vacuum port communicating with the vacuum gap, and the vacuum port is configured to cooperate with a first vacuum pumping device of a machine base to create the negative pressure; a side surface of the upper mold away from the punch is formed with a recessed chamber, the recessed chamber is configured for cooperating with a second vacuum pumping device of a machine top plate to create the negative pressure, and the second negative pressure holes communicate with the recessed chamber.

By adopting the above technical solution, when using the shoe sole mold of the present application, the film is placed on the surface of the mold cavity and pressed by the middle mold, and the vacuum pumping device is utilized to evacuate the vacuum port to form a negative pressure. Air inside the mold cavity may enter the vacuum gap through the first negative pressure holes and be evacuated from the vacuum port, thereby causing the film to undergo extension deformation, and because stably absorbed to the inner wall of the mold cavity. The provision of the heat insulation mold may reduce heat exchange between the lower mold and ambient air when the lower mold is heated, achieving thermal insulation and heat preservation to ensure the molding quality of the shoe sole. Subsequently, the foam preform is placed inside the mold cavity and is pressed against the film. The upper mold and the lower mold are closed together to press the foam preform, and the vacuum pumping device is utilized to evacuate the recessed chamber to form negative pressure. Air between the foam material and the film enters the recessed chamber through the second negative pressure holes and is discharged from the recessed chamber, thereby causing the film to tightly adhere to the foam material. Subsequent heating of the shoe sole mold allows the film and the foam material to bond securely, thus resulting in a manufactured shoe sole with good molding quality.

Optionally, a mating structure for lateral positioning is provided between the lower mold and the vacuum base mold, where when the lower mold is fixed on the vacuum base mold, a first gap is formed between the lower mold and the heat insulation layer, a second gap is formed between the lower mold and the vacuum base mold, the first gap and the second gap jointly form the vacuum gap, and one end of each first negative pressure hole away from the mold cavity communicates with either the first gap or the second gap.

By adopting the above technical solution, when the lower mold is fixed on the vacuum base mold, precise positioning between the lower mold and the vacuum base mold may be maintained through the mating structure, allowing a vacuum gap to be jointly formed among the lower mold, the heat insulation layer and the vacuum base mold. When the first vacuum pumping device operates to evacuate the vacuum gap, by communicating the first negative pressure holes with the first gap or the second gap, air inside the mold cavity may enter the first gap via the first negative pressure holes, then pass through the second gap, and be discharged from the vacuum port. During this process, the travel distance of the air is extended, which reduces heat loss and further enhances the heat insulation and preservation effect of the heat insulation mold.

Optionally, an outer casing is detachably installed on a bottom of the vacuum base mold, where the outer casing is configured to fixedly cover the vacuum port, an end of the outer casing away from the vacuum base mold is formed with a communication hole, an elastic core valve for maintaining the negative pressure is provided between the outer casing and the vacuum base mold, the elastic core valve includes a blocking portion, a deformable portion integrally formed on an outer periphery of the blocking portion, and a mounting portion integrally formed on an outer periphery of the deformable portion, the mounting portion is clamped between the outer casing and the vacuum base mold, the blocking portion is configured to block the communication hole in a normal state, and when the first vacuum pumping device operates, the deformable portion deforms in a direction away from the lower mold and forces the blocking portion to move away from the communication hole.

By adopting the above technical solution, when the first vacuum pumping device operates to evacuate the vacuum gap, the negative pressure suction generated by the first vacuum pumping device forces the deformable portion to deform in a direction away from the lower mold, thereby moving the blocking portion away from the communication hole to open it and allowing internal air to smoothly exit the vacuum gap via the communication hole. After the first vacuum pumping device has operated for a period of time and the film is steadily adsorbed to the inner wall of the mold cavity, the first vacuum pumping device may be turned off. At this time, the deformable portion will revert to its original shape to reseal the communication hole, thereby maintaining the negative pressure. Compared with the continuous operation of the first vacuum pumping device, this design may further reduce heat loss from the lower mold and offer the benefit of energy conservation.

Optionally, the mating structure includes an insertion boss on the lower mold and a mating groove formed in the vacuum base mold, where the insertion boss is configured to be inserted in the mating groove, a return spring is provided inside the mating groove, the bottom wall of the vacuum base mold is configured with a connecting hole in communication with the mating groove, a connecting bolt is provided inside the connecting hole, the connecting bolt is inserted through the return spring and is fixed to the insertion boss, and in an initial state, one end of the connecting bolt abuts against an inner end wall of the connecting hole, and the lower mold and the vacuum base mold are spaced apart; and an outer side surface of the vacuum base mold is formed with an inclined slide groove, a limiting slider is slidably installed inside the inclined slide groove, the limiting slider is configured to slide down to its limit position in a normal state, an inner side surface of the limiting slider is provided with a first toothed portion, a side surface of the insertion boss is provided with a second toothed portion adapted to the first toothed portion, and when the insertion boss moves downward to abut against an inner end wall of the mating groove, the first toothed portion will cooperate with the second toothed portion for positioning.

By adopting the above technical solution, when the lower mold is fixed on the vacuum base mold, the insertion boss is inserted into the mating groove, which enables precise positioning between the lower mold and the vacuum base mold. The connecting bolt is connected with the insertion boss through the connecting hole, so as to force the insertion boss to move downward and abut against the inner end wall of the mating groove. At this point, the lower mold may abut against the vacuum base mold in a fitting manner to form a sealed vacuum gap, and the engagement between the first toothed portion and the second toothed portion ensures a stable sealed state of the vacuum gap. After the shoe sole is foamed and molded, forcing the limiting slider to move outward to disengage the first toothed portion from the second toothed portion allows the insertion boss to move in a direction away from the vacuum base mold under the elastic force of the return spring. At this point, the lower mold is separated from the vacuum base mold, and external air may rush into the interior of the vacuum base mold through the gap between lower mold and the vacuum base mold, thereby eliminating the negative pressure suction of the first negative pressure holes and facilitating the subsequent demolding operations of the shoe sole.

Optionally, a plurality of support plates are provided inside the second gap, where the support plates are fixed on the outer bottom surface of the lower mold or an inner bottom surface of the vacuum base mold, when the lower mold is fixed on the vacuum base mold, the support plates abut against the inner bottom surface of the vacuum base mold or the outer bottom surface of the lower mold, and an air passage is formed between adjacent support plates for passage of air.

By adopting the above technical solution, the support plates may support the lower mold when the lower mold is fixed on the vacuum base mold, reducing the occurrence of localized deformation of the lower mold caused by prolonged suspension during the shoe sole foam molding process, which helps to extend the service life of the lower mold.

Optionally, each support plate is formed with a negative pressure channel for passage of gas, where a Tesla valve is provided in the negative pressure channel.

By adopting the above technical solution, when the first vacuum pumping device operates, air inside the mold cavity may normally pass through the Tesla valves after entering the vacuum gap and be evacuated from the vacuum port, thereby facilitating the stable adsorption of the film to the inner wall of the mold cavity. Subsequently, after the film is stably adsorbed to the inner wall of the mold cavity, the reverse flow of air through the Tesla valves will be severely obstructed. At this time, controlling the first vacuum pumping device to operate intermittently may provide stable negative pressure for each first negative pressure hole to adsorb the film, which also offers the advantage of energy saving. Moreover, after the shoe sole is foamed and molded, the first vacuum pumping device is turned off, which allows air to slowly flow back to the first negative pressure holes through the Tesla valves during the cooling phase, thereby facilitating subsequent demolding operations of the shoe sole.

Optionally, a flow path system is formed inside the lower mold, where the flow path system is arranged around an outer periphery of the mold cavity, two opening ends of the flow path system are open to the outer bottom surface of the lower mold, two insertion pipes are fixed on an inner bottom surface of the vacuum base mold, a sealing sleeve is fixedly sleeved on an outer peripheral surface of each insertion pipe, when the lower mold is fixed on the vacuum base mold, the two insertion pipes are respectively inserted into the two opening ends of the flow path system, two communication passages are formed on an outer side wall of the vacuum base mold, and the two communication passages respectively communicate with the two insertion pipes.

By adopting the above technical solution, when the lower mold is fixed on the vacuum base mold, the two insertion pipes may be respectively inserted into the two opening ends of the flow path system. By introducing steam, cooling water, or other media into one of the communication passages, the media may flow unidirectionally within the flow path system, which achieves rapid heating or cooling while reducing media blockage inside the flow path system to ensure the normal use of the shoe sole mold.

In summary, the present application includes at least one of the following beneficial effects:
1. By mounting a foam preform or foam particles in different molding states inside a sealed mold cavity, the tight bonding between the foam preform and the film or the direct foam molding of the foam particles may improve the smooth adhesion between the film and the foamed body, reducing the occurrence of molding defects such as air bubbles.
2. Setting the negative pressure value between the foam preform and the film to be less than that between the mold cavity and the film allows the film to be tightly attached to the inner wall of the mold cavity, reducing the local extension of the film into the negative pressure holes caused by the pressure difference, thereby facilitating subsequent demolding, trimming and shaping of the molded shoe sole.

### BRIEF DESCRIPTION OF THE DRAWINGS

FIG. 1 is a schematic view showing the arrangement of a film on a surface of a mold cavity according to a first embodiment;
FIG. 2 is a schematic view showing the structure after the film is adsorbed onto an inner wall of the mold cavity under negative pressure according to the first embodiment;
FIG. 3 is a schematic view showing the structure after the blanking of the film according to the first embodiment;
FIG. 4 is an overall schematic view of the shoe sole mold after the mold cavity is closed according to the first embodiment;
FIG. 5 is an overall schematic view of the shoe sole mold after the mold cavity is closed according to a second embodiment;
FIG. 6 is an exploded view of the shoe sole mold according to a third embodiment;
FIG. 7 is an overall schematic view of the shoe sole mold according to the third embodiment;
FIG. 8 is a partial sectional view of a lower mold according to the third embodiment, mainly showing the specific structure of the flow path system;
FIG. 9 is a schematic view showing the structure of the vacuum base mold according to the third embodiment;
FIG. 10 is an overall schematic view of the shoe sole mold after the mold cavity is closed according to a fourth embodiment;
FIG. 11 is a schematic view of the vacuum base mold according to a fifth embodiment;
FIG. 12 is a schematic view of the vacuum base mold according to a sixth embodiment;
FIG. 13 is a partial schematic view of positions of a vacuum port and a first vacuum hole when the vacuum base mold is installed on the machine base according to a seventh embodiment;
FIG. 14 is a partial cross-sectional view of the plug-in structure between the lower mold and the vacuum base mold according to the seventh embodiment;
FIG. 15 is an enlarged view of part A in FIG. 14.

### Reference sign list

1 film
11 adhesive layer
2 foam preform
3 foam particles
4 upper mold
41 punch
42 feeding hole
43 second negative pressure hole
44 recessed chamber
5 middle mold
51 through groove
6 lower mold
61 mold cavity
62 first negative pressure hole
63 steam hole
64 extension part
65 insertion boss
651 second toothed portion
66 flow path system
7 heat insulation mold
71 vacuum base mold
711 mating groove
712 vacuum port
713 communication passage
714 recessed portion
715 internal hook groove
716 return spring
717 connecting hole
718 inclined sliding groove
72 heat insulation layer
73 vacuum gap
731 first gap
732 second gap
74 insertion pipe
741 sealing sleeve
75 support plate
751 negative pressure channel
752 Tesla valve
76 outer casing
761 hook portion
762 communication hole
77 elastic core valve
771 blocking portion
772 deformable portion
773 mounting portion
78 connecting bolt
79 limiting slider
791 first toothed portion
792 grip portion
8 machine base
81 first vacuum hole
9 machine top plate
91 second vacuum hole

### DETAILED DESCRIPTION

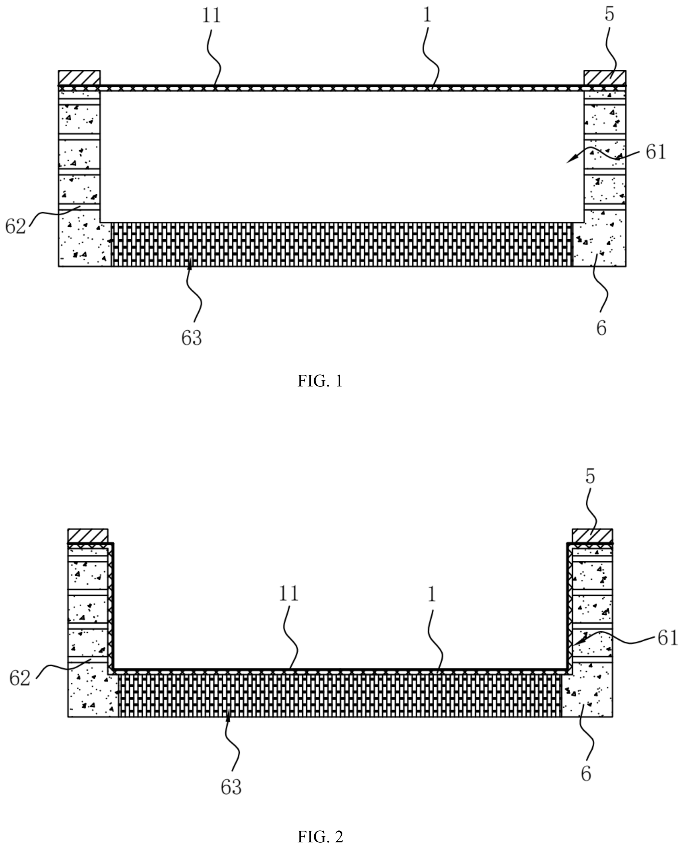

The present application will be described in further detail below with reference to FIGS. 1-15.

### The first embodiment

The embodiment of the present application discloses a shoe sole manufacturing method.

Firstly, it should be noted that the preparation and processing of shoe soles are usually carried out inside the shoe sole mold. The existing shoe sole mold includes an upper mold 4, a middle mold 5, and a lower mold 6. A mold cavity 61 for shoe sole molding is provided on a side surface of the lower mold 6, and a punch 41 is fixed on a side surface of the upper mold 4. In the mold-closed state, the upper mold 4 covers the lower mold 6, and the punch 41 may be located inside the mold cavity 61.

A shoe sole manufacturing method specifically includes following steps:

Step S1: Preparing a film 1, referring to FIG. 1, selecting a shoe sole mold and blanking a film 1 to a corresponding dimensions according to a size of the shoe sole mold. The film 1 in the present embodiment is rectangular to completely cover the mold cavity 61 of the lower mold 6. In addition, a layer of TPU foaming adhesive is applied to a surface of the film 1 using a spraying device. After the TPU foaming adhesive solidifies, it forms an adhesive layer 11. The thickness of the adhesive layer 11 is 0.05-0.10 mm, preferably 8 mm in the present embodiment. It should be noted here that the order of the two operations namely blanking the film 1 and applying the TPU foaming adhesive material onto the film 1 may be interchanged.

Step S2: Mounting the film 1. First, the film 1 is placed on a surface of the mold cavity 61 of the lower mold 6. The film 1 must completely cover the surface of the mold cavity 61. The middle mold 5 is flipped to press it against the film 1, thereby pressing and fixing the film 1. At this point, a sealed space is formed between the film 1 and the mold cavity 61.

Next, referring to FIG. 2, the film 1 in the present application is made of TPU material. The film 1 is heated using an irradiation lamp or a heat baking device capable of providing high-temperature heat to soften the film 1 and achieve good ductility after heating. The preheating temperature of the film 1 ranges from 110°C to 200°C, and the duration is between 10s and 30s. In the present embodiment, preferably, the preheating temperature is 160°C and the duration is 20s. The selection of TPU material enables the film 1 to exhibit good elasticity and ductility, which helps reduce wrinkles in the film 1 itself when the film 1 is subsequently adsorbed to the inner wall of the mold cavity 61 under negative pressure, thereby minimizing molding defects of the manufactured shoe sole.

Afterwards, the lower mold 6 is configured with a plurality of first negative pressure holes 62. A first external vacuum pumping device is connected to the first negative pressure holes 62. The first vacuum pumping device is activated, to extract gas from the sealed space through the first negative pressure holes 62. The ductile film 1 expands inward and tightly adheres to the inner wall of the mold cavity 61 under the influence of the negative pressure suction.

Step S3: Selecting a corresponding film adhesion method according to the molding state of the shoe sole.

This embodiment uses foam particles 3 that have not begun foaming for processing and preparation of the shoe sole and adopts a second film adhesion method, which specifically includes following steps.

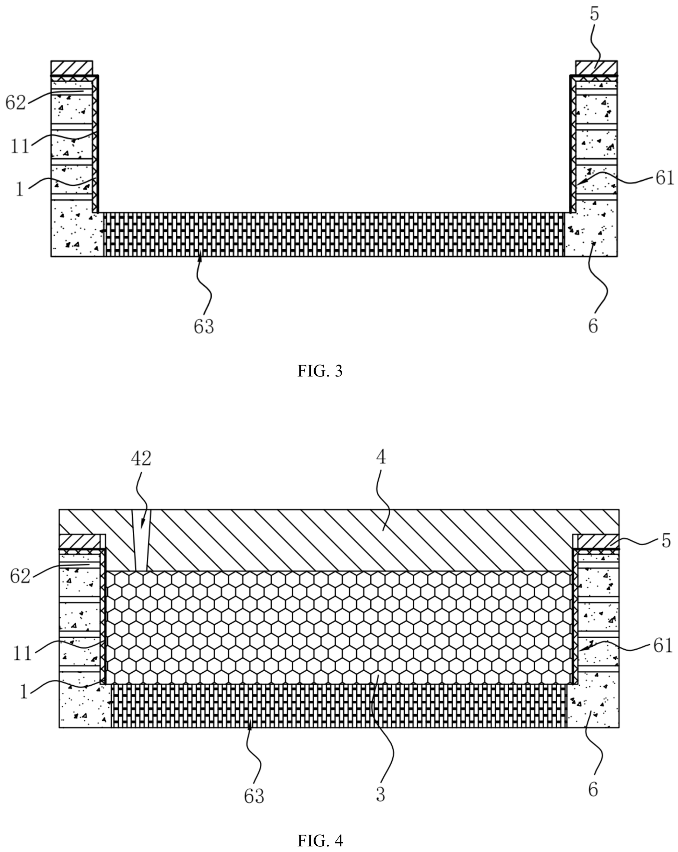

Referring to FIG. 3, in step S34, a cutting device is used to blank the film 1, removing the portion of the film 1 attached to an inner bottom wall of the mold cavity 61 while retaining only the portion attached to an inner peripheral wall of the mold cavity 61. Since the inner peripheral wall of the mold cavity 61 is also configured with first negative pressure holes 62, the remaining portion of the film 1 may be still tightly attached to the inner peripheral wall of the mold cavity 61.

Referring to FIG. 4, in step S35, the upper mold 4 is covered onto the lower mold 6 to seal the mold cavity 61. The upper mold 4 must be interlocked with the lower mold 6, so as to form a sealed foaming space between the upper mold 4 and the film 1. The upper mold 4 is configured with a feeding hole 42. By connecting a particle injection device to the feeding hole 42, foam particles 3 are injected into the foaming space, allowing the foam particles 3 densely fill the foaming space, and then the first vacuum pumping device is turned off.

In step S36, the lower mold 6 is configured with a steam hole 63 communicating with the inner bottom wall of the foaming space. An external steam device externally connected to the steam hole 63 is used to introduce steam into the foaming space, with the injected steam pressure ranging from 3 kg pressure to 5 kg pressure and the molding duration ranging from 20 seconds to 40 seconds. In this embodiment is preferable, the steam pressure is 4 kg and the molding duration is 30s. The foam particles 3 expand through foaming when heated by the steam, and adjacent foam particles 3 are cross-linked with each other. Additionally, the adhesive layer 11 melts when heated, enabling the expanded foam particles 3 to be cross-linked with the film 1 through the adhesive layer 11, thereby producing the shoe sole.

It should be noted that during the foaming process, the gas inside the foaming space and the introduced steam may exit the foaming space through the feeding hole 42, which reduces the occurrence of molding defects such as air bubbles between the foam particles 3 and the film 1 after the film 1 is bonded, thereby improving the molding quality of the shoe sole.

Step S4: Cooling and shaping. The shoe sole mold is cooled to lower the temperature of the shoe sole for solidification and shaping.

Step S5: Trimming and shaping. The first vacuum pumping device is turned off, the shoe sole is removed from the mold cavity 61, and the excess flash of the film 1 on the shoe sole is removed away, to obtain the molded shoe sole. This shoe sole may be directly bonded to the shoe upper for use as a shoe outsole, or used as a midsole with another outsole bonded to its bottom to form the complete shoe sole.

The implementation principle of the shoe sole manufacturing method in this embodiment is as follows:

By foaming and expanding the foam particles 3 with steam in a sealed foaming space, the foam particles 3 may be tightly attached to the film 1 and become intercross-linked with it. This not only facilitates the rapid molding of the shoe sole but also ensures a tighter connection between the foam particles 3 and the film 1, greatly reducing the risk of accidental detachment or peeling of the film 1 during subsequent use, thereby endowing the shoe sole with a long service life.

### The second embodiment

The embodiment of the present application also discloses a shoe sole manufacturing method.

The shoe sole manufacturing method of the present embodiment is basically the same as that in the first embodiment, which will not be repeated here in detail, except that the present embodiment uses a foam preform 2 for the processing and preparation of the shoe sole and adopts the first film adhesion method, which specifically includes following steps.

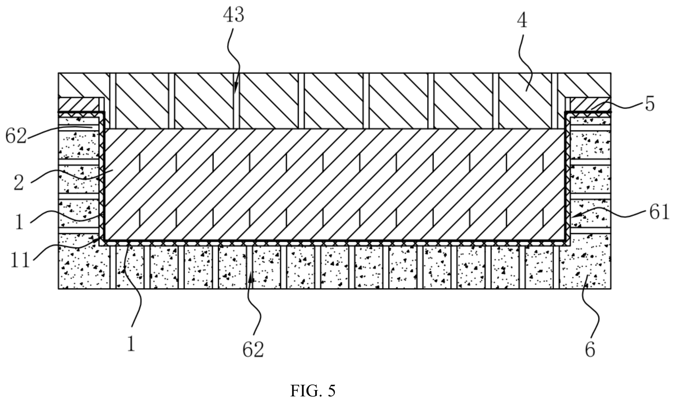

Step S31, using a foaming molding device to prefabricate a foam preform 2. The foam preform 2 in this embodiment is formed by foaming TPU material, and modifying the foaming mold to naturally form concave exhaust patterns on an outer surface of the foam preform 2 during molding. Then, referring to FIG. 5, the foam preform 2 is placed inside the mold cavity 61. The size of the selected foam preform 2 must be larger than that of the mold cavity 61, with a difference of 1-2cm between the both, so that after the foam preform 2 is placed in the mold cavity 61, it may be compressed and deformed to tightly abut against an inner side surface of the film 1.

Step S32, first, covering the upper mold 4 onto the lower mold 6 to close the mold cavity 61. The upper mold 4 must be interlocked with the lower mold 6. At this point, the punch 41 may force the foam preform 2 to press against the film 1, thereby forming a sealed bonding space between the upper mold 4 and the mold cavity 61.

Secondly, the upper mold 4 is configured with second negative pressure holes 43. An external second vacuum pumping device is connected to the second negative pressure holes 42, to extract gas from the internal pores of the foam preform 2, creating negative pressure in the bonding space and causing the foam preform 2 to shrink integrally and become denser. The vacuum pressure of the second vacuum pumping device is 1 kg, and the vacuum suction duration ranges from 100s to 300s, in the present embodiment, the vacuum suction duration is preferably 200s. The gas between the foam preform 2 and the film 1 may also be discharged from the second negative pressure holes 43 through the exhaust patterns, or from the second negative pressure holes 43 via the internal pores of the foam preform 2, which greatly reduces the likelihood of air bubbles between the foam preform 2 and the film 1 after molding, thereby improving the molding quality of the shoe sole.

In this embodiment, when the second vacuum pumping device is activated, the first vacuum pumping device may be stopped. In another embodiment, when the second vacuum pumping device is activated, the first vacuum pumping device may also maintain negative pressure, at this point, the negative pressure value inside the bonding space will be less than that inside the sealed space, creating a pressure difference therebetween. The pressure difference ranges from 1 kg to 2 kg, preferably 1 kg. The pressure difference may force the film 1 to be tightly attached to the inner wall of the mold cavity 61. It can be understood that after the second vacuum pumping device creates negative pressure inside the bonding space, the pressure difference between the inner and outer sides of the film 1 decreases. This ensures the film 1 tightly adheres to the inner wall of the mold cavity 61 while reducing the localized extension of the film 1 into the first negative pressure holes of the lower mold 6, thereby facilitating subsequent demolding and trimming of the finished shoe sole.

The implementation principle of the shoe sole manufacturing method in the embodiment is as follows.

A larger-sized foam preform 2 is compressed into the smaller mold cavity 61, and the gas between the foam preform 2 and the film 1 is extracted by vacuums suction. This greatly reduces the occurrence of air bubbles inside the bonding space and improves the molding quality of the shoe sole. Furthermore, using vacuum suction to make the foam preform 2 contract more densly also helps to enhance the rebound resilience of the produced shoe sole, endowing the shoe sole with excellent performance and strong market competitiveness.

### The third embodiment

The embodiment of the present application also discloses a shoe sole mold, which may be applied to the shoe sole manufacturing method of the first embodiment or the second embodiment to facilitate the smooth molding of the shoe sole.

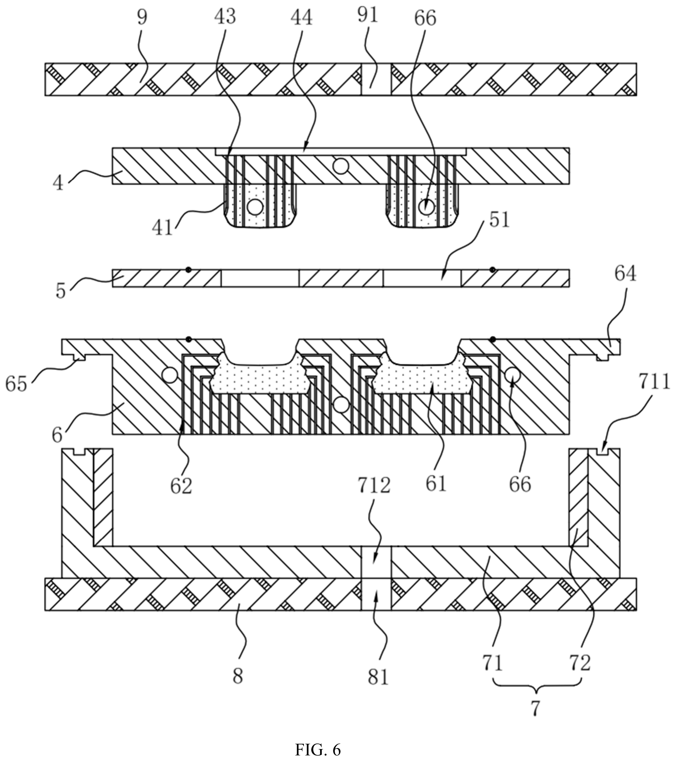

Referring to FIG. 6, the shoe sole mold includes an upper mold 4, a middle mold 5, a lower mold 6, and a heat insulation mold 7 arranged in sequence. A punch 41 is fixed on a side surface of the upper mold 4 close to the lower mold 6, the middle mold 5 is provided with a through groove 51 for the punch 41 to pass through, and a side surface of the lower mold 6 close to the upper mold 4 is configured with a mold cavity 61, the mold cavity 61 matches with the punch 41 in shape. When the upper mold 4, middle mold 5, and lower mold 6 are closed together, the punch 41 may pass through the through groove 51 and enter the mold cavity 61, thereby forming a sealed space inside the mold cavity 61 for foam molding the shoe sole.

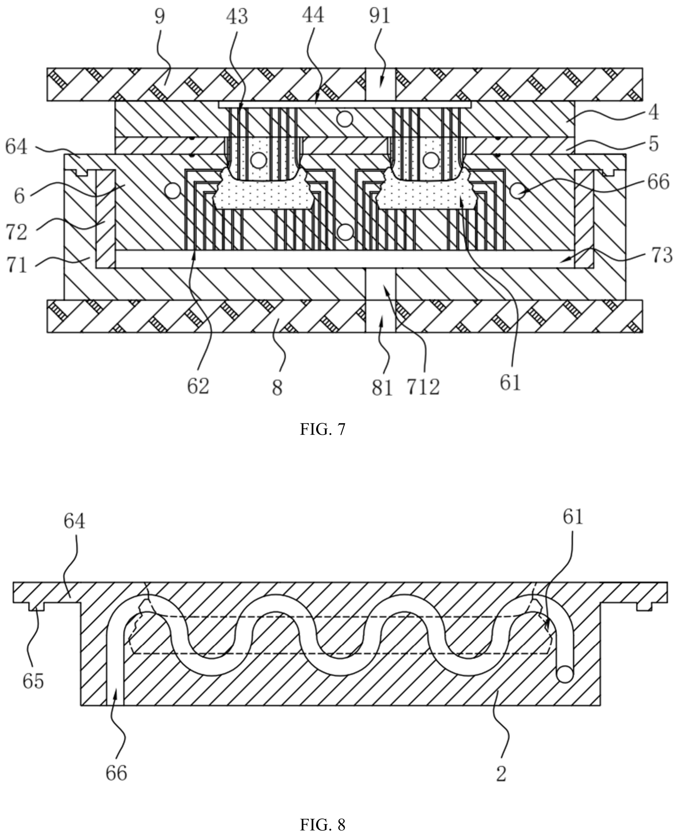

A plurality of first negative pressure holes 62 are formed on a side surface of the lower mold 6 away from the upper mold 4, the first negative pressure holed 62 are open to the inner walls of the mold cavity 61 to create negative pressure inside the mold cavity 61. The heat insulation mold 7 includes a vacuum base mold 71 and a heat insulation layer 72, where the vacuum base mold 71 is made of an aluminum alloy material. Referring to FIG. 7, the vacuum base mold 71 is fixed on the side surface of the lower mold 6 away from the upper mold 4, and the vacuum base mold 71 is spaced apart from the lower mold 6, to form a vacuum gap 73.

The heat insulation layer 72 is made of a material with low thermal conductivity, and the heat insulation layer 72 is adhesively fixed to each inner sidewall of the vacuum base mold 71. After the vacuum base mold 71 is fixed to the lower mold 6, the heat insulation layer 72 may abut against the outer sidewall of the lower mold 6, reducing heat exchange between the lower mold 6 and the external air to achieve a heat preservation effect while ensuring the closed state of the vacuum gap 73.

Returning to FIG. 6, a mating structure for lateral positioning is provided between the lower mold 6 and the vacuum base mold 71. Specifically, the periphery of the lower mold 6 is provided with a plurality of extension parts 64, the extension parts 64 are all integrally formed with the lower mold 6, and the extension parts 64 are all located on the side of the lower mold 6 close the upper mold 4. The mating structure includes insertion bosses 65 and mating grooves 711 adapted to mate therewith. The insertion bosses 65 are integrally formed on the side surface of the extension parts 64 away from the upper mold 4. Two insertion bosses 65 are provided, the two insertion bosses 65 are symmetrically arranged on two opposite sides of the lower mold 6.

The mating grooves 711 are formed on a side surface of the vacuum base mold 71 close to the upper mold 4, and the number of mating grooves 711 is equal to that of the insertion bosses 65. After the lower mold 6 is fixed on the vacuum base mold 71, the extension parts 64 may abut against the vacuum base mold 71, enhancing the sealing effect between the extension parts 64 and the vacuum base mold 71. Meanwhile, each insertion boss 65 may be inserted into the respective one of the mating grooves 711, achieving precise positioning of the lower mold 6.

Also referring to FIG. 7, a vacuum port 712 is formed on a side surface of the vacuum base mold 71 away from the lower mold 6. The vacuum port 712 is open to an inner side surface of the vacuum base mold 71 and communicates with the vacuum gap 73. When the lower mold 6 of this shoe sole mold is in use, the vacuum base mold 71 will be installed on the machine base 8 of the molding equipment. The machine base 8 is formed with a first vacuum hole 81, the first vacuum hole 81 may be aligned with the vacuum port 712. The molding equipment is equipped with a first vacuum pumping device configured to communicate with the first vacuum hole 81. By controlling the operation of the first vacuum pumping device, the air inside the mold cavity 61 may be extracted sequentially through the first negative pressure holes 62, the vacuum gap 73, the vacuum port 712, and the first vacuum hole 81, creating a negative pressure inside the mold cavity 61.

During the foam molding of the shoe sole, the film 1 is laid on the surface of the mold cavity 61 of the lower mold 6. The middle mold 5 is used to press the film 1 firmly against the lower mold 6. The film 1 is preheated to be in an extended state. Then, the first vacuum pumping device is controlled to extract air inside the mold cavity 61, to form a negative pressure inside the first negative pressure holes 62, thereby adsorbing the film 1 to the inner wall of the mold cavity 61.

A recessed chamber 44 is formed on the side surface of the upper mold 4 away from the lower mold 6. The punch 41 and the upper mold 4 are jointly configured with second negative pressure holes 43, the second negative pressure holes 43 communicate with the recessed chamber 44. When the upper mold 4 of this shoe sole mold is in use, it is installed on the machine top plate 9 of the molding equipment. The machine top plate 9 is configured with a second vacuum hole 91, the second vacuum hole 91 is in communication with the recessed chamber 44. The molding equipment is equipped with a second vacuum pumping device in communication with the second vacuum hole 91. Controlling the second vacuum pumping device, the air inside the mold cavity 61 may be extracted sequentially through the second negative pressure holes 43, the recessed chamber 44, and the second vacuum hole 91.

During the foam molding of the shoe sole, after the film 1 is adsorbed to the inner wall of the mold cavity 61 by the negative pressure of the first negative pressure holes 62, the foam material is filled into the mold cavity 61 and abuts against the film 1. The upper mold 4 and the lower mold 6 are closed, and the second vacuum pumping device is controlled to extract the air between the foam material and the film 1, facilitating tight bonding between the foam material and the film 1 and thus improving the molding quality of the shoe sole.

It should be noted that the foam material used in the embodiment may be foam particles 3 or a foam preform 2. When a foam preform 2 is used, micropores are formed during the primary foam molding of the foam preform 2 to facilitate air discharge. Meanwhile, all the second negative pressure holes 43 need to be arranged around the periphery of the punch 41 to ensure that the air between the foam preform 2 and the film 1 may be smoothly extracted from the gap between the foamed bland 2 and the film 1, thereby guaranteeing molding quality.

Both the interior of the upper mold 4 and the interior of the lower mold 6 are provided with a flow path system 66 for steam heating or water cooling. In this embodiment, the lower mold 6 is manufactured by 3D printing, and the upper mold 4 and the punch 41 are integrally fabricated as one piece by 3D printing. The layout of the flow path system 66 is arranged more flexibly via 3D printing. Referring to FIG. 8, taking the lower mold 6 as an example, the flow path system 66 of the lower mold 6 may be arranged around the outer periphery of the mold cavity 61, facilitating rapid heating and cooling of all parts of the mold cavity 61. The two opening ends of the flow path system 66 are both open to the bottom surface of the lower mold 6, serving as the inlet and outlet for the medium, respectively.

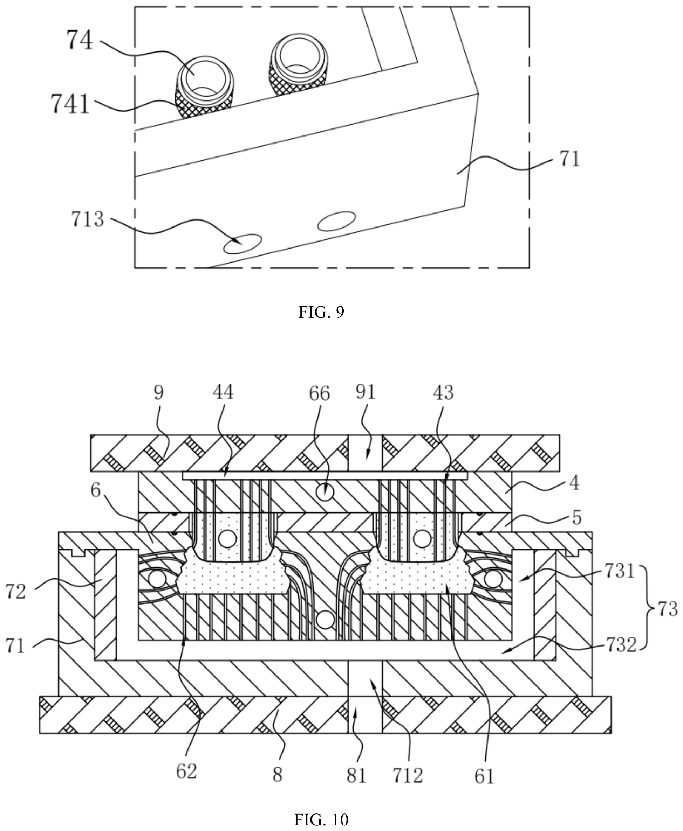

Referring to FIG. 9, two insertion pipes 74 are fixed on an inner bottom wall of the vacuum base mold 71. A sealing sleeve 741 is fixedly sleeved on the outer peripheral surface of each insertion pipe 74. When the lower mold 6 is fixed on the vacuum base mold 71, the two insertion pipes 74 may be respectively inserted into the two opening ends of the flow path system 66. The provision of the sealing sleeve 741 may improve the sealing performance between the insertion pipes 74 and the opening ends of the flow path system 66.

An outer sidewall of the vacuum base mold 71 is provided with two communication passages 713, and the two communication passages 713 respectively communicate with the two insertion pipes 74. When the lower mold 6 is fixed on the vacuum base mold 71, by instroducing steam, cooling water, or other media into one of the communication passages 713, the medium may flow unidirectionally into the flow path system 66 and be discharged from the other communication passage 713. This achieves rapid heating or cooling while reducing the occurence of media blockage inside the flow path system 66, thus ensuring the shoe sole mold operates normally.

It should be noted that, for the shoe sole manufacturing method using unfoamed foam particles 3 in the first embodiment, a plurality of steam holes 63 should be formed at the bottom of the lower mold 6 and communicate with a steam device. Such structures are conventional in the art and will not be described in detail herein.

The implementation principle of the shoe sole mold in the embodiment is as follows:
When the shoe sole mold is in use, the first vacuum pumping device is used to evacuate the interior of the vacuum port 712 to create negative pressure. Air inside the mold cavity 61 may enter the vacuum gap 73 through the first negative pressure holes 62 and be extracted from the vacuum port 712, thus adsorbing the film 1 to the inner wall of the mold cavity 61. The provision of the heat insulation layer 72 may reduce heat exchange between the lower mold 6 and the ambient air, thereby achieving a heat preservation effect. This maintains a small temperature difference between the internal temperature of the lower mold 6 and the set heating temperature, thereby guaranteeing the molding quality of the shoe sole.

### The fourth embodiment

The embodiment of the present application further discloses a shoe sole mold.

Referring to FIG. 10, the remaining components of the shoe sole mold disclosed in the present embodiment are the same as those of the third embodiment and thus will not be repeated. The difference between this embodiment and the third embodiment lies in that the outer peripheral dimension of the lower mold 6 is smaller than the internal dimension of the vacuum base mold 71. After the lower mold 6 is fixed on the vacuum base mold 71 and lateral positioning is achieved through the mating structure, a first gap 731 is formed between the lower mold 6 and the heat insulation layer 72 arranged at intervals, and a second gap 732 is formed between the lower mold 6 and the vacuum base mold 71 arranged at intervals. The first gap 731 and the second gap 732 may jointly form the vacuum gap 73 of the third embodiment. One end of some first negative pressure holes 62 away from the mold cavity 61 communicates with the first gap 731, while one end of the other first negative pressure holes 62 away from the mold cavity 61 communicate with the second gap 732.

When the lower mold 6 is fixed on the vacuum base mold 71, the first vacuum pumping device is controlled to operate to evacuate the vacuum gap 73. Air inside the mold cavity 61 may enter the first gap 731 through the first negative pressure holes 62, then exit the vacuum 712 through the second gap 732, such that the air travel distance within the vacuum gap 73 is elongated, which may reduce heat loss, thus further enhancing the heat insulation effect of the heat insulation mold 7.

### The fifth embodiment

The embodiment of the present application further discloses a shoe sole mold.

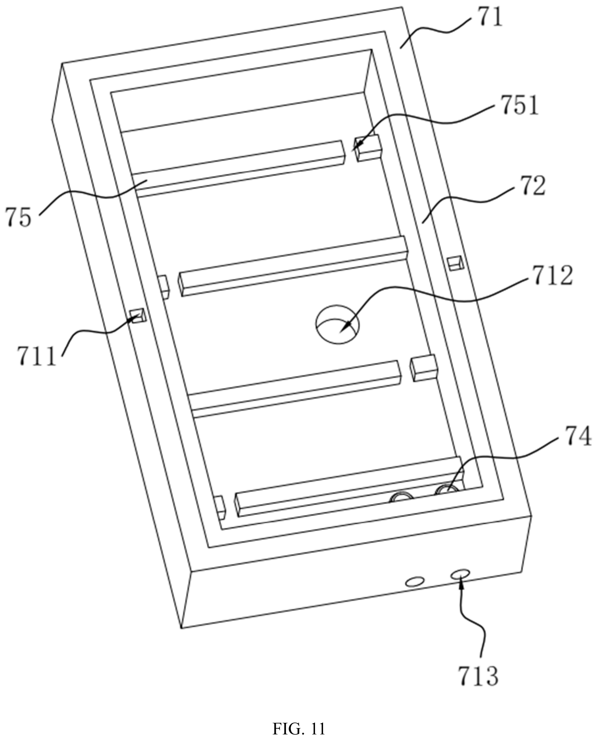

Referring to FIG. 11, the remaining components of the shoe sole mold disclosed in the present embodiment are the same as those of the third embodiment or the fourth embodiment and thus will not be repeated. The difference between this embodiment and the third embodiment or the fourth embodiment lies in that a plurality of support plates 75 are provided inside the second gap 732, and the support plates 75 are fixed on the inner bottom wall of the vacuum base mold 71. When the lower mold 6 is fixed on the vacuum base mold 71, the support plates 75 may abut against the bottom surface of the lower mold 6, thereby providing auxiliary support for the lower mold 6 and thus minimizing the risk of localized deformation during the shoe sole foam molding.

It should be noted that the plurality of support plates 75 in the present embodiment are arranged side by side, thus forming an air passage between adjacent support plates 75. Each support plate 75 is configured with a negative pressure channel 751 penetrating both sides, which allows air to smoothly flow in each air channel through the negative pressure channels 751, and ultimately be extracted from the vacuum port 712 by the first vacuum pumping device.

In another embodiment, the support plates 75 may be fixed on the outer bottom wall of the lower mold 6. When the lower mold 6 is fixed on the vacuum base mold 71, the support plates 75 may correspondingly abut against the inner bottom wall of the vacuum base mold 71, achieving the same auxiliary supporting effect on the lower mold 6, which is not limited by the implementation method of the present embodiment.

### The sixth embodiment

The embodiment further discloses a shoe sole mold, which is mainly applied in the shoe sole manufacturing method of the second embodiment to maintain the negative pressure of the first negative pressure holes 62 during the foam molding.

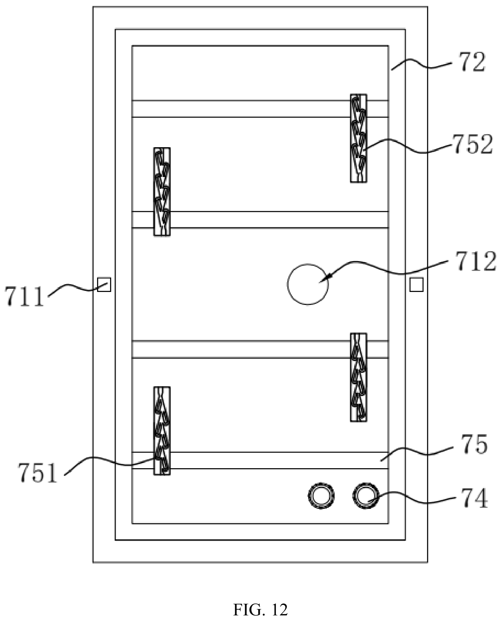

Referring to FIG. 12, the remaining components of the shoe sole mold disclosed in the present embodiment are the same as those of the fifth embodiment and thus will not be repeated. The difference between this embodiment and the fifth embodiment lies in that a Tesla valve 752 is provided in each negative pressure channel 751. The specific structure of the Tesla valve 752 is well known in the art, as shown in FIG. 12. It should be noted that the Tesla valve 752 in the present embodiment allows air in the vacuum gap 73 to pass smoothly when the first vacuum pumping device operates, while preventing reverse airflow. At this moment, the first vacuum pumping device only needs to operate intermittently to meet the negative pressure requirements of the first negative pressure holes 62, providing an energy-saving benefit. Furthermore, after the foam molding of the shoe sole is completed, by controlling the first vacuum pumping device to stop operating, air may still flow slowly back to the first negative pressure holes 62 through the Tesla valves 752 during the cooling phase, thereby facilitating the subsequent demolding operation of the shoe sole.

### The seventh embodiment

The embodiment further discloses a shoe sole mold, which is mainly applied in the shoe sole manufacturing method of the second embodiment to maintain the negative pressure of the first negative pressure holes 62 during the foam molding process.

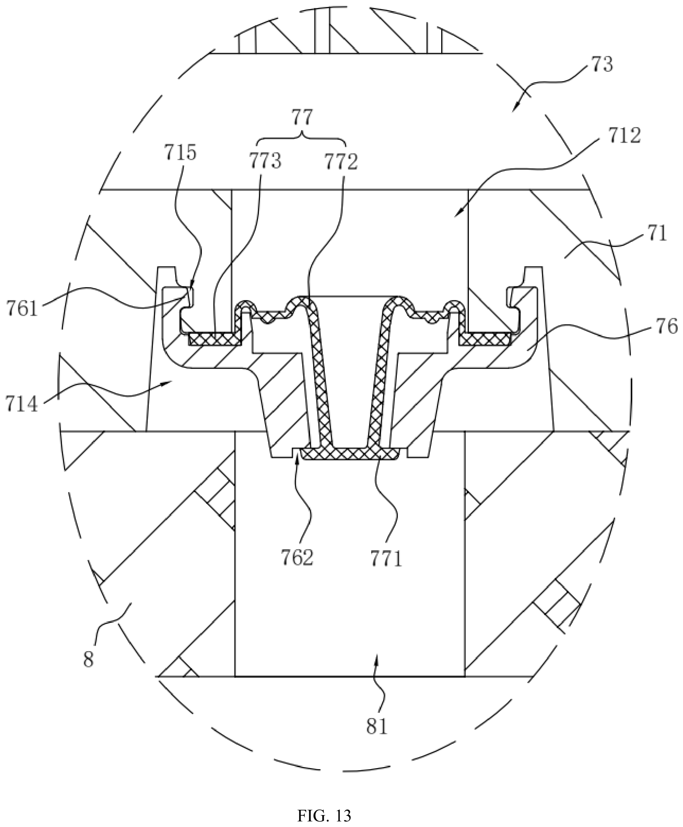

Referring to FIG. 13, the remaining components of the shoe sole mold disclosed in the present embodiment are the same as those of the third embodiment or the fourth embodiment and thus will not be repeated. The difference between the present embodiment and the third embodiment or the fourth embodiment lies in that an outer casing 76 is detachably mounted on the bottom surface of the vacuum base mold 71, and the outer casing 76 may cover the vacuum port 712 fixedly.

Specifically, the bottom surface of the vacuum base mold 71 is formed with a recessed portion 714. An inner sidewall of the recessed portion 714 is provided with an internal hook groove 715 extending circumferentially. An inner edge of the outer casing 76 is provided with an integrally formed hook portion 761. Partially embedding the outer casing 76 into the recessed portion 714 causes the hook portion 761 to abut against the inner wall of the recessed portion 714 and undergo elastic deformation. When the hook portion 761 is aligned with the internal hook groove 715, the hook portion 761 may matingly engage with the internal hook groove 715, thus enabling the outer casing 76 to be stably mounted on the vacuum base mold 71.

An end of the outer casing 76 away from the vacuum base mold 71 is formed with a communication hole 762. The communication hole 762 penetrates the outer casing 76 and communicates with the vacuum port 712 to allow air to pass smoothly. An elastic core valve 77 is clamped between the outer casing 76 and the recessed portion 714. The elastic core valve 77 is configured to allow air to pass unidirectionally only through the communication hole 762 and be extracted by the first vacuum pumping device, while preventing air from flowing back into the vacuum gap 73. Thus, when the first vacuum pumping device stops operating, a stable negative pressure is maintained in the first negative holes 62.

The elastic core valve 77 is entirely made of silicone material. The elastic core valve 77 includes a blocking portion 771, a deformable portion 772, and a mounting portion 773. The deformable portion 772 is integrally formed on an outer periphery of the blocking portion 771, while the mounting portion 773 is integrally formed on an outer periphery of the deformable portion 772, and the mounting portion 772 is matingly disposed inside the outer casing 76. When the outer casing 76 is fixed on the recessed portion 714 via the cooperation between the hook portion 761 and the internal hook groove 715, the outer casing 76 and the recessed portion 714 may jointly clamp the mounting portion 773, thereby fixing the elastic core valve 77.

The deformable portion 772 passes through the communication hole 762 and the deformable portion 772 is arranged in a suspended manner relative to the outer casing 76, thus forming a deformation space for the deformation of the deformable portion 772. The blocking portion 771 is located at an opening of the communication hole 762, and the blocking portion 771 seals the communication hole 762 in a normal state. When the first vacuum pumping device operates, the elastic core valve 77 is subjected to negative pressure suction, which causes the deformable portion 772 to deform toward an opening of the communication hole 762. At this moment, the blocking portion 771 may move away from the communication hole 762, allowing air inside the vacuum gap 73 to be smoothly extracted to create negative pressure. It can be understood that when the first vacuum pumping device stops operating, the deformable portion 772 may drive the blocking portion 771 to reseal the communication hole 762 through its own elastic reset, thereby maintaining the negative pressure state inside the vacuum gap 73.

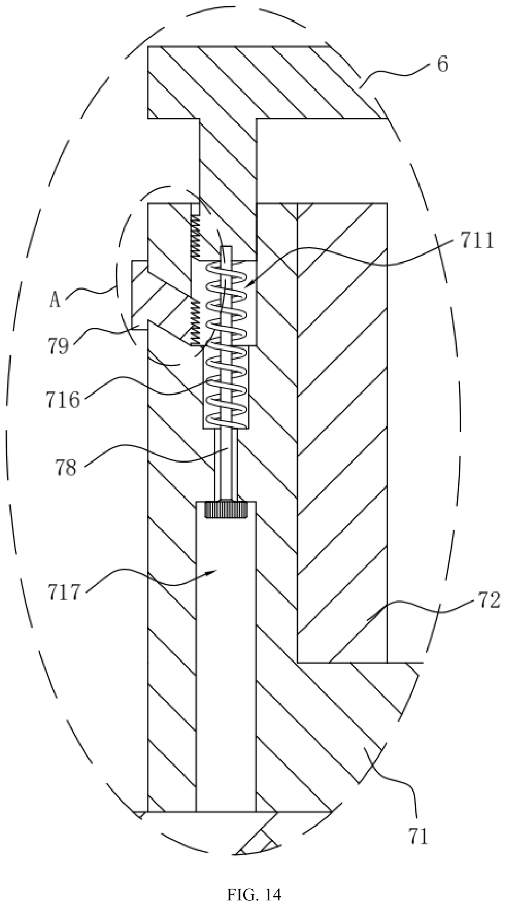

In addition, referring to FIG. 14, a return spring 716 is embedded inside the mating groove 711 in the embodiment. After the insertion boss 65 is inserted into the mating groove 711, it may abut against the return spring 716. The outer bottom wall of the vacuum base mold 71 is formed with a connecting hole 717 communicating with the mating groove 711. The connecting hole 717 is a trapezoidal hole, and a connecting bolt 78 is disposed inside the connecting hole 717. The connecting bolt 717 passes through the return spring 716 and fixedly connected to the insertion boss 65. In the initial state, the insertion boss 65 moves outward under the elastic force of the return spring 716, and an end of the connecting bolt 78 may abut against an inner end wall of the connecting hole 717. At this moment, a clearance may be formed between the lower mold 6 and the vacuum base mold 71, and ambient air may enter the vacuum base mold 71 through the clearance between the lower mold 6 and the vacuum base mold 71.

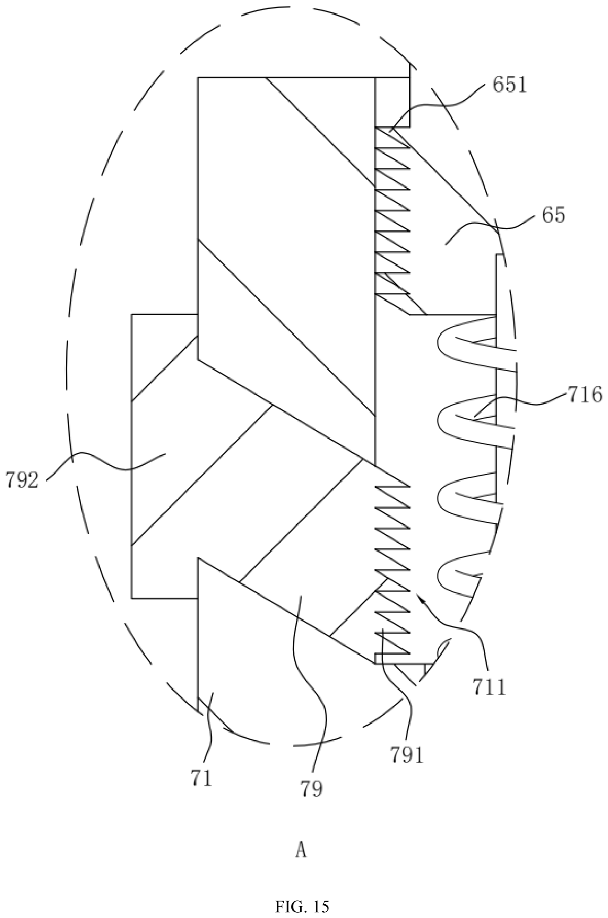

Referring to FIG. 15, an outer side surface of the vacuum base mold 71 is further configured with an inclined slide groove 718, and the inclined groove 718 is in communication with the mating groove 711. A limiting slider 79 is slidably mounted inside the inclined slide groove 718, and an inner side surface of the limiting slider 79 is provided with an integrally formed first toothed portion 791. In the initial state, the limiting slider 79 may move downward to its limit position under its own weight, at this time, a part of the first toothed portion 791 is located in the mating groove 711.

A side surface of the insertion boss 65 is provided with a second toothed portion 651, the second toothed portion 651 is adapted to the first toothed portion 791 in shape. Simultaneously referring to FIG. 14, when the lower mold 6 is installed in the vacuum base mold 71, the lower mold 6 is forced to move toward the vacuum base mold 71. The insertion boss 65 may move downward and finally abut against an inner end wall of the mating groove 711. At this point, the first toothed portion 791 may cooperate with the second toothed portion 651 for positioning, while the lower mold 6 may remain steadily pressed against the vacuum base mold 71, thereby maintaining the vacuum gap 73 in a stable sealed condition.

It should be noted that in the embodiment, a top surface of the first toothed portion 791 is inclined at an angle of 30°-60° relative to the horizontal direction, so that the insertion boss 65 may automatically push the limiting slider 79 away, that is may automatically force the limiting slider 79 to move outwards when moving downward. A bottom surface of the first toothed portion 791 is parallel to the horizontal direction, so that after the insertion boss 65 abuts against the inner end wall of the mating groove 711, the limiting slider 79 will return inward under its own weight, which enables the first toothed portion 791 to stably engage with the second toothed portion 651, thereby reducing the risk of accidental disengagement between the first toothed portion 791 and the second toothed portion 651.

In addition, an outer side surface of the limiting slider 79 is provided with an integrally formed grip portion 792 to facilitate the operator in moving the limiting slider 79. After the shoe sole is foamed and molded, the operator may grasp the grip portion 792 and pull the limiting slider 79 outward. The insertion boss 65 may automatically return to its initial state under the elastic force of the return spring 716. At this point, the lower mold 6 is spaced apart from the vacuum base mold 71, so that external air may quickly enter the first negative pressure holes 62. This eliminates the negative pressure in the first negative pressure holes 62 and thereby facilitating the subsequent demolding of the shoe sole.

Finally, it should be noted that the improvement solutions of the present embodiment are equally applicable to the solutions according to the fifth embodiment or the sixth embodiment, and are not limited to the manner shown in the embodiment.

The above are the preferred embodiments of the present application, which do not limit the scope of protection of the present application. Therefore, any equivalent changes made based on the structure, shape, and principles of the present application should be covered within the protection scope of the present application.

## Claims

1. A shoe sole manufacturing method, **characterized by** comprising following steps:
step S1, preparing a film (1), wherein a surface of the film (1) is provided with an adhesive layer (11);
step S2, mounting the film (1), fixing the film (1) on a shoe sole mold, preheating the film (1), and adsorbing the film (1) to an inner wall of a mold cavity (61) of the shoe sole mold by a negative pressure;
step S3, selecting one film adhesion method according to a molding state of the shoe sole;
wherein for a foam preform (2) that has already been foamed and molded, a first film adhesion method is selected, comprising:
S31, mounting the foam preform (2) inside the mold cavity (61) and closing the mold cavity (61);
S32, extracting gas between the foam preform (2) and the film (1) by applying a secondary negative pressure; and
S33, heating the shoe sole mold to melt the adhesive layer (11), thereby bonding the film (1) and the foam preform (2);
wherein for foam particles (3) that have not started foam molding, a second film adhesion method is selected, comprising:
S34, cutting a bottom of the film (1);
S35, sealing the mold cavity (61), filling the foam particles (3) into the mold cavity (61), and removing the negative pressure applied to the film (1); and
S36, introducing steam between the foam particles (3) and the film (1), to foam the foam particles (3) and to be bonded with the film (1);
step S4, cooling and shaping; and
step S5, trimming and shaping.

2. The shoe sole manufacturing method according to claim 1, **characterized in that** for the foam preform (2) that has already been foamed and molded, an outer surface of the foam preform (2) has exhaust patterns.

3. The shoe sole manufacturing method according to claim 1, **characterized in that** for the foam preform (2) that has already been foamed and molded, a dimension of the foam preform (2) is larger than a dimension of the mold cavity (61), with a difference of 1-2cm between the both.

4. A shoe sole mold, applied in the shoe sole manufacturing method according to any one of claims 1-3, **characterized by** comprising an upper mold (4), a middle mold (5), a lower mold (6), and a heat insulation mold (7) arranged in sequence, wherein a side surface of the lower mold (6) is configured with a mold cavity (61) for shoe sole molding, a side surface of the upper mold (4) is fixed with a punch (41), the punch (41) is located inside the mold cavity (61) in a closed state, an inner wall of the mold cavity (61) is configured with a plurality of first negative pressure holes (62), the plurality of first negative pressure holes are open to an outer bottom surface of the lower mold (6), a side wall of the punch (41) is configured with a plurality of second negative pressure holes (43), and the plurality of second negative pressure holes are open to an outer side surface of the upper mold (4);
the heat insulation mold (7) comprises a vacuum base mold (71) for fixation of the lower mold (6) and heat insulation layers (72) arranged on inner side walls of the vacuum base mold (71), the heat insulation layers (72) jointly cover an outer side surface of the lower mold (6), a vacuum gap (73) for heat insulation and preservation is formed between the vacuum base mold (71) and the lower mold (6), a bottom wall of the vacuum base mold (71) is formed with a vacuum port (712) communicating with the vacuum gap (73), and the vacuum port (712) is configured to cooperate with a first vacuum pumping device of a machine base (8) to create the negative pressure,
a side surface of the upper mold (4) away from the punch (41) is formed with a recessed chamber (44), the recessed chamber (44) is configured for cooperating with a second vacuum pumping device of a machine top plate (9) to create the negative pressure, and the second negative pressure holes (43) communicate with the recessed chamber (44).

5. The shoe sole mold according to claim 4, **characterized in that** a mating structure for lateral positioning is provided between the lower mold (6) and the vacuum base mold (71), wherein when the lower mold (6) is fixed on the vacuum base mold (71), a first gap (731) is formed between the lower mold (6) and the heat insulation layer (72), a second gap (732) is formed between the lower mold (6) and the vacuum base mold (71), the first gap (731) and the second gap (732) jointly form the vacuum gap (73), and one end of each first negative pressure hole (62) away from the mold cavity (61) communicates with either the first gap (731) or the second gap (732).

6. The shoe sole mold according to claim 5, **characterized in that** an outer casing (76) is detachably installed on a bottom of the vacuum base mold (71), wherein the outer casing (76) is configured to fixedly cover the vacuum port (712), an end of the outer casing (76) away from the vacuum base mold (71) is formed with a communication hole (762), an elastic core valve (77) for maintaining the negative pressure is provided between the outer casing (76) and the vacuum base mold (71), the elastic core valve (77) comprises a blocking portion (771), a deformable portion (772) integrally formed on an outer periphery of the blocking portion (771), and a mounting portion (773) integrally formed on an outer periphery of the deformable portion (772), the mounting portion (773) is clamped between the outer casing (76) and the vacuum base mold (71), the blocking portion (771) is configured to block the communication hole (762) in a normal state, and when the first vacuum pumping device operates, the deformable portion (772) deforms in a direction away from the lower mold (6) and forces the blocking portion (771) to move away from the communication hole (762).

7. The shoe sole mold according to claim 6, **characterized in that** the mating structure comprises an insertion boss (65) on the lower mold (6) and a mating groove (711) formed in the vacuum base mold (71), wherein the insertion boss (65) is configured to be inserted in the mating groove (711), a return spring (716) is provided inside the mating groove (711), the bottom wall of the vacuum base mold (71) is configured with a connecting hole (717) in communication with the mating groove (711), a connecting bolt (78) is provided inside the connecting hole (717), the connecting bolt (78) is inserted through the return spring (716) and is fixed to the insertion boss (65), and in an initial state, one end of the connecting bolt (78) abuts against an inner end wall of the connecting hole (717), and the lower mold (6) and the vacuum base mold (71) are spaced apart; and
an outer side surface of the vacuum base mold (71) is formed with an inclined slide groove (718), a limiting slider (79) is slidably installed inside the inclined slide groove (718), the limiting slider (79) is configured to slide down to its limit position in a normal state, an inner side surface of the limiting slider (79) is provided with a first toothed portion (791), a side surface of the insertion boss (65) is provided with a second toothed portion (651) adapted to the first toothed portion (791), and when the insertion boss (65) moves downward to abut against an inner end wall of the mating groove (711), the first toothed portion (791) will cooperate with the secondtoothed portion (651) for positioning.

8. The shoe sole mold according to claim 5, **characterized in that** a plurality of support plates (75) are provided inside the second gap (732), wherein the support plates (75) are fixed on the outer bottom surface of the lower mold (6) or an inner bottom surface of the vacuum base mold (71), when the lower mold (6) is fixed on the vacuum base mold (71), the support plates (75) abut against the inner bottom surface of the vacuum base mold (71) or the outer bottom surface of the lower mold (6), and an air passage is formed between adjacent support plates (75) for passage of air.

9. The shoe sole mold according to claim 8, **characterized in that** each support plate (75) is formed with a negative pressure channel (751) for passage of gas, wherein a Tesla valve (752) is provided in the negative pressure channel (751).

10. The shoe sole mold according to claim 4, **characterized in that** a flow path system (66) is formed inside the lower mold (6), wherein the flow path system (66) is arranged around an outer periphery of the mold cavity (61), two opening ends of the flow path system (66) are open to the outer bottom surface of the lower mold (6), two insertion pipes (74) are fixed on an inner bottom surface of the vacuum base mold (71), a sealing sleeve (741) is fixedly sleeved on an outer peripheral surface of each insertion pipe (74), when the lower mold (6) is fixed on the vacuum base mold (71), the two insertion pipes (74) are respectively inserted into the two opening ends of the flow path system (66), two communication passages (713) are formed on an outer side wall of the vacuum base mold (71), and the two communication passages (713) respectively communicate with the two insertion pipes (74).
